# EUROPEAN PATENT SPECIFICATION

(11) **EP 3 790 204 B1**
(45) Date of publication and mention of the grant of the patent: **14.12.2022**
(21) Application number: 19195837.0
(22) Date of filing: 06.09.2019
(51) Int. Cl.: H04B 17/00, H04L 5/00, H03M 1/00, H04W 56/00

(54) **SYSTEM AND METHOD FOR TESTING BROADBAND COMMUNICATION CHANNELS**
SYSTEM UND VERFAHREN ZUM TESTEN BREITBANDIGER KOMMUNIKATIONSKANÄLE
SYSTÈME ET PROCÉDÉ POUR TESTER DES CANAUX DE COMMUNICATION À BANDE LARGE

(43) Date of publication of application: 10.03.2021
(73) Proprietor: Rohde & Schwarz GmbH & Co. KG, 81671 München (DE)
(72) Inventor: Holzmann, Gottfried, 85604 Zorneding (DE); Simon, Martin, 83624 Otterfing (DE); Oetjen, Martin, 82194 Gröbenzell (DE)
(74) Representative: Rupp, Christian

(56) References cited:
- US-A1- 2012 098 713
- US-A1- 2018 034 559

## Description

The invention relates to flexible testing of multiple broadband communication channels, especially in a hybrid architecture that is necessary for, for instance Fifth Generation (5G) mobile communication.

Generally, hybrid architectures present an alternative for fully digital pre-coding in RF communication systems by allowing a possible reduction in the number of RF chains and converters. Therein, a single transmission-reception (TRX) channel is assigned for each RF communication channel. For each communication channel, a baseband generation and a frequency shift are implemented to the corresponding carrier based on the communication standard. Alternatively, a role based communication system may establish voice communication channels, data communication channels or both based on a certain role or task.

For example, the document EP 0 795 991 A1 shows a role based communication system that facilitates communication with an individual who, at the present time, is fulfilling a certain functional role or task. However, the foregoing systems require additional network resources and further arise complexities for multiple channel generation. Particularly in the case of multiple carrier transmission in a hybrid architecture, the additional baseband generation and frequency shifting for each RF communication channel result in a complex test system.

Further disclosures of wireless testing systems are US 2012/098713 A1 (MOW MATT A [US] ET AL) 26 April 2012 and US 2018/034559 A1 (FOEGELLE MICHAEL DAVID [US]) 1 February 2018.

Accordingly, the object of the invention is to provide a system and a method for testing broadband communication channels in a simplified manner, especially in a hybrid architecture.

The object is solved by the features of the first independent claim for the system and by the features of the second independent claim for the method. The dependent claims contain further developments.

According to a first aspect of the invention, a system for testing broadband communication channels is provided. The system comprises at least one transmission-reception (TRX) path comprising a transmission end and a reception end. The system further comprises a processing unit adapted to generate at least two communication channels in the transmission-reception path. In this context, the at least two communication channels belong to different communication standards. Additionally or alternatively, the at least two communication channels are adapted to operate according to one single communication standard.

Therefore, different communication channels are generated in one TRX path thereby facilitating flexible testing of broadband communication channels. The different communication channels belong to different communication standards according to, for instance Long Term Evolution (LTE), Wireless Local Area Network (WLAN), Global System for Mobile Communications (GSM) and the like. As a result, the system advantageously enables multi-channel transmission and/or reception with more than one carrier via one TRX path. Furthermore, the different communication channels may belong to one single communication standard (LTE, WLAN, GSM and so on). Hence, the system advantageously allows component carrier aggregation in order to increase the operating bandwidth.

It is to be noted that the system, despite being able to function as a mobile device or a base station, is further capable to perform testing on signals beyond the capabilities of mobile devices or base stations, particularly when testing broadband communication channels.

According to a first preferred implementation form of said first aspect of the invention, the processing unit is further adapted to synchronize the at least two communication channels. Advantageously, channel synchronization is achieved in a simplified manner by means of, for instance the timing alignment of the baseband signals.

According to a second preferred implementation form of said first aspect of the invention, the transmission-reception path further comprises a frequency shifting unit and whereby the processing unit is further adapted to control the frequency shifting unit. Advantageously, a controllable frequency shift is applied to the TRX path in order to achieve frequency conversion at different ranges.

According to a further preferred implementation form of said first aspect of the invention, the system further comprises at least one digital-to-analog converter connected at the transmission end and at least one analog-to-digital converter connected at the reception end. In this context, the digital-to-analog converter and the analog-to-digital converter are adapted to operate in multi-channel-mode. Advantageously, the analog-to-digital converter and the digital-to-analog converter are able to handle large operating bandwidths.

According to a further preferred implementation form of said first aspect of the invention, at least one communication channel comprises an interferer, preferably a predefined interferer. Advantageously, real life operation conditions for the channels can be emulated.

According to a further preferred implementation form of said first aspect of the invention, the at least two communication channels are further adapted to convey signals with same information data at different frequency range. Therefore, frequency diversity schemes are advantageously incorporated.

According to a further preferred implementation form of said first aspect of the invention, the system further comprises at least one additional transmission-reception path, whereby the processing unit is further adapted to generate the at least two communication channels via the transmission-reception paths. Advantageously, multiple broadband communication channels can be generated via one or more TRX paths.

According to a further preferred implementation form of said first aspect of the invention, the processing unit is further adapted to synchronize the transmission-reception paths. Hence, multipath propagation is advantageously realized by means of the synchronized TRX paths. According to a second aspect of the invention, a method for testing broadband communication channels is provided. The method comprises the steps of providing at least one transmission-reception (TRX) path comprising a transmission end and a reception end, and generating at least two communication channels in the transmission-reception path. In this context, the at least two communication channels belong to different communication standards. Therefore, different communication channels are generated in one TRX path thereby facilitating flexible testing of broadband communication channels.

According to a first preferred implementation form of said second aspect of the invention, the method further comprises the step of synchronizing the at least two communication channels. Advantageously, channel synchronization is achieved in a simplified manner by means of, for instance the timing alignment of the baseband signals.

According to a second preferred implementation form of said second aspect of the invention, the method further comprises the steps of connecting at least one digital-to-analog converter at the transmission end, connecting at least one analog-to-digital converter at the reception end, and operating the digital-to-analog converter and the analog-to-digital converter in multi-channel-mode. Advantageously, the analog-to-digital converter and the digital-to-analog converter are able to handle large operating bandwidths.

According to a further preferred implementation form of said second aspect of the invention, the method further comprises the step of transmitting signals with same information data at different frequency range through the at least two communication channels. Therefore, frequency diversity schemes are advantageously incorporated.

According to a further preferred implementation form of said second aspect of the invention, the method further comprises the step of providing at least one additional transmission-reception path thereby generating the at least two communication channels via the transmission-reception paths. Advantageously, multiple broadband communication channels can be generated via one or more TRX paths.

According to a further preferred implementation form of said second aspect of the invention, the method further comprises the step of synchronizing the transmission-reception paths. Hence, multipath propagation is advantageously realized by means of the synchronized TRX paths.

Exemplary embodiments of the invention are now further explained with respect to the drawings by way of example only, and not for limitation. In the drawings:
- Fig. 1: shows an exemplary embodiment of the system according to the first aspect of the invention;
- Fig. 2: shows a detailed view of the exemplary embodiment of the system according to the first aspect of the invention;
- Fig. 3: shows an exemplary embodiment of the transmission-reception path according to the first aspect of the invention;
- Fig. 4: shows an exemplary scheme for frequency conversion and frequency combining according to the first aspect of the invention; and
- Fig. 5: shows an exemplary embodiment of the method according to the second aspect of the invention.

Reference will now be made in detail to the embodiments of the present invention, examples of which are illustrated in the accompanying drawings. Similar entities and reference numbers in different figures have been partially omitted. However, the following embodiments of the present invention may be variously modified and the range of the present invention is not limited by the following embodiments.

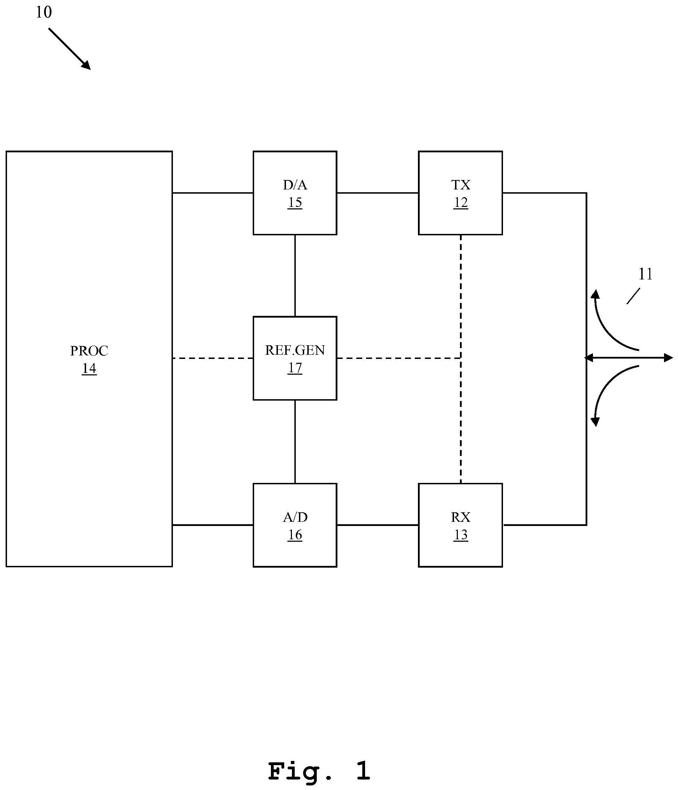

In Fig. 1, an exemplary embodiment of the system 10 according to the first aspect of the invention is illustrated. The system 10 comprises a transmission-reception (TRX) path 11 having a transmission end 12 and a reception end 13. A digital-to-analog converter (DAC) 15 and an analog-to-digital converter (ADC) 16 are respectively connected at the transmission end 12 and at the reception end 13. The DAC 15 and the ADC 16 are further connected to a processing unit 14. In this context, the TRX path 11 may also be referred to as RF channel, TRX channel and the like. Moreover, the processing unit 14 may also be referred to as microcontrollers, microprocessors, microcomputers, etc. The processing unit 14 may further be configured in hardware, firmware, software, or their combination.

The system 10 further comprises a reference frequency generator 17, preferably with RF multipliers and dividers in order to generate local frequency at different ranges. In addition, the reference frequency generator 17 also provides the reference sample clock for the DAC 15 and the ADC 16 as well as the frequency reference to the transmission end 12 and the reception end 13. An antenna or an antenna array may be connected to the TRX path 11, for instance by means of a switch or duplexer (not shown) in order to switch signals between the transmission end 12 and the reception end 13.

For testing broadband channels, the system 10 may act as a base station or as a mobile device in order to evaluate the uplink and downlink criteria. However, it is to be understood that the system 10 is able to test communication channels for signals beyond the capabilities of mobile devices and/or base stations.

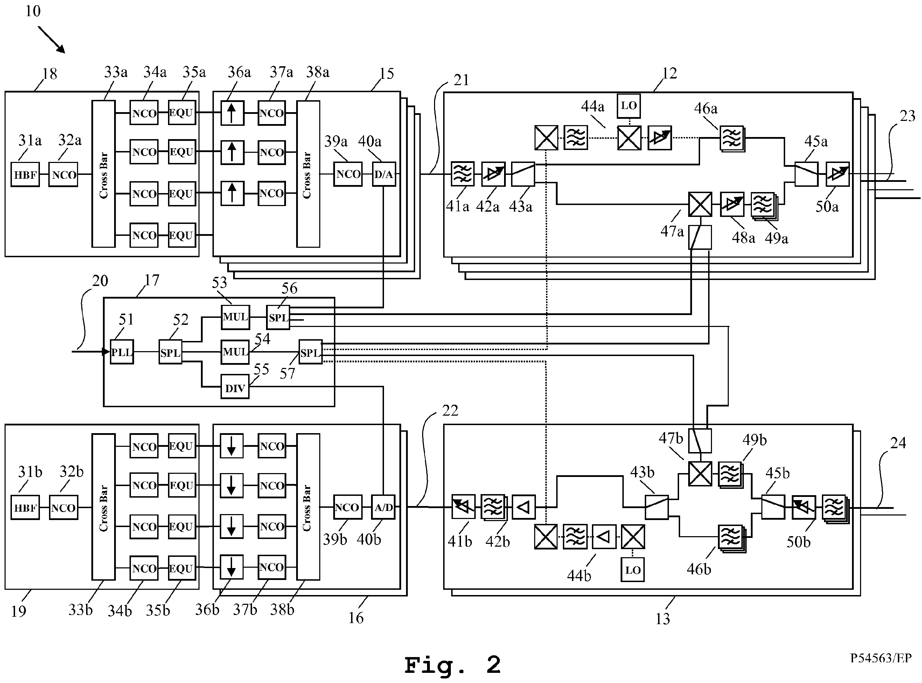

In Fig. 2, a detailed view of the exemplary embodiment of the system 10 according to the first aspect of the invention is illustrated. Herein, the system 10 resembles a multi-transmission multi-reception system, particularly a 4TX-2RX multiple input multiple output (MIMO) direct conversion system in a hybrid architecture. The number of RF transmission and reception channels are only illustrated by way of example only, and not for limitation. The transmission end 12 and its respective DAC 15 are connected to the processing unit 14 through a transmission interface 18 of the processing unit 14. Likewise, the reception end 13 and its respective ADC 16 are connected to the processing unit 14 through a reception interface 19 of the processing unit 14. The transmission interface 18 and the reception interface 19 may be implemented, for instance based on Field Programmable Gate Array (FPGA) interfaces.

The transmission interface 18 generally comprises a half-band filter (HBF) unit 31a for multi-rate filtering and a numerically controlled oscillator (NCO) 32a, especially a complex-numerically controlled oscillator (CNCO) for I-Q component generation. Each of the I-Q components are forwarded to corresponding NCOs 34a and equalizing filters (EQU) 35a through a crossbar switch 33a for synthesis. At this point, the signal components are fed to the DAC 15, particularly to respective interpolating units 36a for up-sampling. The components are then transferred to the digital synthesizing unit of the DAC 15, comprising a NCO 39a and a digital-to-analog conversion unit 40a, through a crossbar switch 38a in order to perform direct frequency synthesis and thereby outputting signals in the range of the intermediate frequency (IF) 21. As illustrated herein, the DAC 15 is operating in multi-channel mode in order to handle large bandwidths for modulating and analyzing multiple carriers.

At the transmission end 12, the signal 21 at IF band is conditioned via a band pass filter (BPF) 41a and an amplifier 42a. Preferably, the transmission end 12 comprises two transmission paths as depicted herein, which are controlled via switching elements 43a and 45a respectively connected at both ends. One transmission path comprises a BPF 46a for direct transmission of the carrier while the other path preferably includes additional signal conditioning means, particularly a mixer 47a, an amplifier 48a and an additional BPF 49a. In any case, the signal is further amplified through an amplifier 50a and the resulting RF signal 23 is transmitted to, for instance a mobile device, a base station, a device under test and so on. The amplifiers 42a, 48a, 50a are preferably variable gain amplifiers. However, other RF amplifiers such as RF power amplifiers, RF wideband amplifiers, low noise amplifiers etc. are also applicable in appropriate cases.

At the reception end 13, the received RF signal 24 is band selected through a BPF and an amplifier 50b, either implemented separately or in combination. The reception end 23 preferably comprises two reception paths analogous to the transmission end 12, which are controlled via switching elements 45b and 43b respectively connected at the ends. Hence, one path is dedicated for direct reception of the carrier through a BPF 46b and the other path includes additional signal conditioning elements, particularly a mixer 47b and an additional BPF 49b. The band selected RF signal is further conditioned via filtration 42b and amplification 41b, which result in the signal 22 at IF range.

At this point, the signal 22 is forwarded to the ADC 16, where it is synthesized through an analog-to-digital conversion unit 40b and further via a NCO 39b. The I-Q components are fed to corresponding NCOs 37b and decimation units 36b for down-sampling. The decimated signal is then transmitted to the reception interface 19, which comprises components analogous to the transmission interface 18, such as NCOs 32b and 34b, EQUs 35b, crossbar switch 33b and HBF 31b.

For generating reference frequencies, the system 10 advantageously comprises the reference frequency generator 17. The processing unit 14 feeds a reference signal 20 to a phase locked loop (PLL) 51 of the reference frequency generator 17. Generally, the reference signal 20 is at a low frequency range and the PLL 51 generates high frequency clocks from the low frequency reference signal 20. In order to generate reference frequency at difference frequency range, the reference signal generator 17 further comprises frequency multipliers and dividers 53, 54, 55, connected to the PLL 51 through a splitter 52. The multipliers 53 and 54 are further connected to a respective splitter 56, 57 for driving the different range of reference frequencies to the corresponding modules.

In this context, the reference frequency generator 17 provides the reference sample clocks to the DAC 15 and the ADC 16. The reference frequency generator 17 further provides reference frequencies for the transmission end 12 and the reception end 13, for instance to the mixers 47a and 47b and/or to the units 44a and 44b respectively. Further advantageously, the processing unit 14 may synchronize the transmission end 12 and the reception end 13 through signals generated from the reference frequency generator 17 and fed to the transmission and reception ends 12, 13. Additionally or alternatively, a predefined amount of interference can be fed in the paths of the transmission end 12 and/or the reception end 13 via the reference frequency generator 17 generated by, for instance the processing unit 14 or the reference frequency generator 17 itself.

For example, the processing unit 14 may transmit a low frequency reference signal of 500 MHz and the PLL 51 outputs a high frequency clock at 2.5 GHz. The multiplier 53 may output a reference at 10 GHz with a multiplication factor of 4. The multiplier 54 may output a reference at 7.5 GHz with a multiplication factor of 3. The divider 55 may output a reference at 1.25 GHz with a division factor of 2. In case of an FPGA based interface, the transmission interface 18 typically outputs signal components at the range of 312.5 MHz. The DAC 15 performs up-sampling and synthesizing and results in the IF range signal at 0.4 GHz - 4 GHz. Herein, the DAC 15 operates at a reference sample clock of 10 GHz that is fed from the multiplier 53 through the splitter 56. The transmission end 12 is synchronized at 10 GHz and additionally at 7.5 GHz, thereby outputting RF signals at a frequency range of 0.4 GHz - 8 GHz.

Similarly, the reception end 13 receives RF signals at a frequency range of 0.4 GHz - 8 GHz and outputs at an IF range of 0.4 GHz - 4 GHz, while being synchronized in an analogous manner to the transmission end 12. The ADC 16 then performs signal synthesis and decimation, thereby outputting the down-sampled signal components to the reception interface at the convenient range of 312.5 MHz. Herein, the ADC operates at a reference sample clock of 1.25 GHz that is fed from the divider 55. The frequency ranges and the sample rates for conversion are only described herein as examples. Difference frequency ranges and corresponding signal sampling rates can be implemented based on the respective communication standards.

It is important to note that the transmission interface 18 and the reception interface 19 can be implemented on a single processing unit. Alternatively, the interfaces 18, 19 can be implemented as separate entities. In case the interfaces 18, 19 are separate entities, appropriate synchronization is additionally performed by the processing unit 14. Furthermore, the reference frequency generator 17 can be a part of the processing unit 14 or can be implemented as a separate entity. In addition, the processing unit 14 synchronizes the RF transmission channels (4TXs) and the RF reception channels (2RXs) in order to perform as a MIMO system. The construction of common signal conditioning blocks such as HBFs, NCOs, EQUs, BPSs, amplifiers and mixers are not described in detail to avoid unnecessarily obscuring the invention.

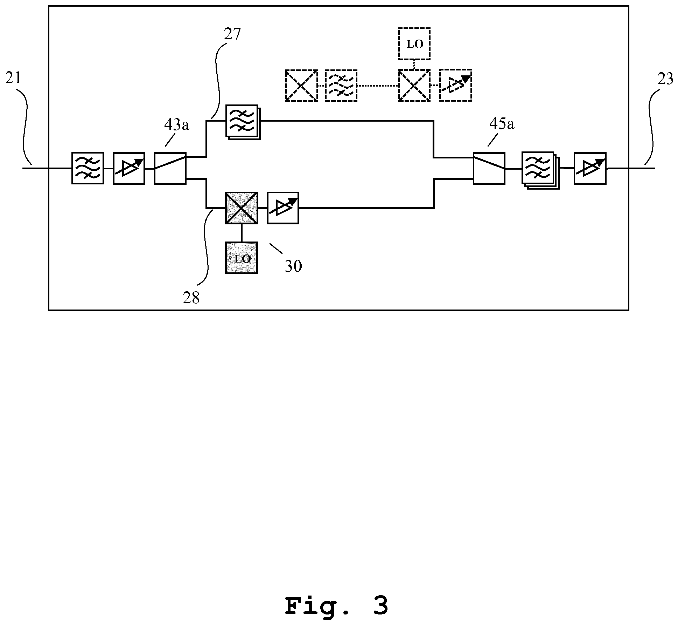

In Fig. 3, an exemplary embodiment of the transmission-reception path according to the first aspect of the invention is illustrated. In particular, a transmission end of the TRX path, for instance one of the RF transmission channels of the 4TX-2RX system of Fig. 2 is exemplified herein. For signal conditioning and transmission, the transmission end includes two separate paths 27, 28 operating in a switching manner. The switches 43a and 45a are connected at respective ends of the paths 27, 28. The switches 43a, 45a are preferably controlled and synchronized by the processing unit 14. In this context, the path 27 is dedicated for direct transmission of the signal and the path 28 is adapted to perform further signal conditioning by means of a mixer 30 or frequency shifter, generally fed by a local oscillator (LO). The mixer 30 is controlled by the processing unit 14 either directly or through the reference frequency generator 17. Hence, the transmission end can advantageously facilitates both direct conversion and up-conversion of the signal, which is at the intermediate frequency range. As a result, multiple carriers can be transmitted over one RF channel by means of different conversion rates.

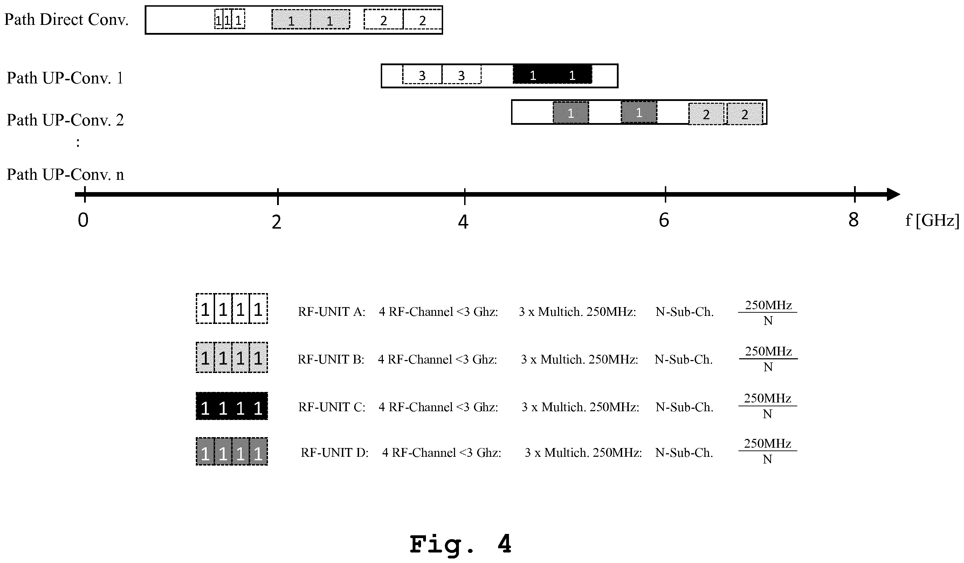

In Fig. 4, an exemplary scheme for frequency conversion and frequency combining according to the first aspect of the invention is illustrated. Particularly with respect to the 4TX-2RX system illustrated in Fig. 2, multiple broadband communication channels are generated for each of the four RF channels for transmitting by means of different conversion paths and RF combining. It is advantageous that multiple communication channels are formed via one or more RF channels that may comprise signals with same information but having different frequency range.

For example, four RF channels may operate in the range of intermediate frequency, particularly less than 3 GHz. The different conversion paths can be, for instance generated by means of different conversion rates and/or implemented via dedicated mixers at different reference frequencies. The direct conversion path in the range of 0-4 GHz, the up-conversion path in the range of 2-6 GHz and the up-conversion path in the range of 4-8 GHz as illustrated herein facilitates three communication channels for each RF channel. As a result, each communication channel may operate in the range of 250 MHz, preferably sub-divided in N number of sub-channels.

In this context, the communication channels may belong to one single communication standard, thereby facilitating component carrier aggregation. Additionally or alternatively, the communication channels may belong to different communication standards. It is to be noted that the number of communication channels that are generated via the RF channels are demonstrated by way of example only, and not for limitation.

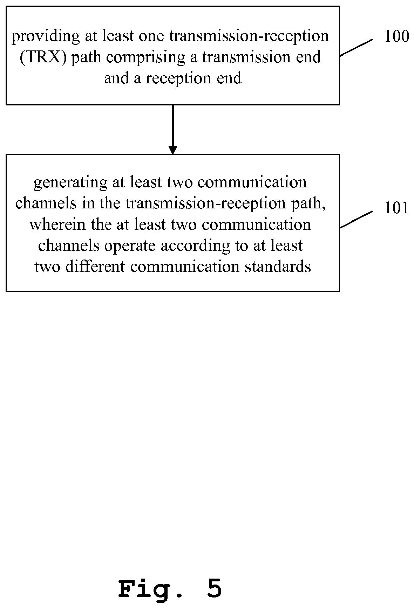

In Fig. 5, an exemplary embodiment of the method according to the first aspect of the invention is illustrated. In a first step 100, at least one transmission-reception (TRX) path is provided that comprises a transmission end and a reception end. In a second step 101, at least two communication channels are generated in the transmission-reception path, wherein the at least two communication channels operate according to at least two different communication standards.

In addition to this, the method further comprises the step of synchronizing the at least two communication channels.

Moreover, the method further comprises the steps of connecting at least one digital-to-analog converter connected at the transmission end, connecting at least one analog-to-digital converter at the reception end, and operating the digital-to-analog converter and the analog-to-digital converter in multi-channel-mode.

It might be further advantageous if the method further comprises the step of transmitting signals with same information data at different frequency range through the at least two communication channels.

Additionally, the method further comprises the step of providing at least one additional transmission-reception path thereby generating the at least two communication channels via the transmission-reception paths.

Moreover, the method further comprises the step of synchronizing the transmission-reception paths.

The embodiments of the present invention can be implemented by hardware, software, or any combination thereof. Various embodiments of the present invention may be implemented by one or more application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, or the like.

While various embodiments of the present invention have been described above, it should be understood that they have been presented by way of example only, and not limitation. Numerous changes to the disclosed embodiments can be made in accordance with the disclosure herein without departing from the scope of the invention. Thus, the breadth and scope of the present invention should not be limited by any of the above described embodiments. Rather, the scope of the invention should be defined in accordance with the following claims.

Although the invention has been illustrated and described with respect to one or more implementations, alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A system (10) for testing broadband communication channels comprising:
at least one transmission-reception "TRX" path (11) comprising a transmission end (12) and a reception end (13), and
a processing unit (14) adapted to generate at least two communication channels in the transmission-reception path (11),
**characterized in that**
the at least two communication channels belong to two different communication standards, thereby enabling multi-channel transmission and/or reception with more than one carrier via one transmission-reception path (11).

2. The system according to claim 1,
wherein the processing unit (14) is further adapted to synchronize the at least two communication channels.

3. The system according to claim 1 or 2,
wherein the transmission-reception path (11) further comprises a frequency shifting unit (30) and whereby the processing unit (14) is further adapted to control the frequency shifting unit (30).

4. The system according to any of claims 1 to 3,
wherein the system (10) further comprising:
at least one digital-to-analog converter (15) connected at the transmission end (12), and
at least one analog-to-digital converter (16) connected at the reception end (13).

5. The system according to claim 4,
wherein the digital-to-analog converter (15) and the analog-to-digital converter (16) are adapted to operate in multi-channel-mode.

6. The system according to any of claims 1 to 5,
wherein at least one communication channel comprises an interferer, preferably a predefined interferer.

7. The system according to any of claims 1 to 6,
wherein the at least two communication channels are further adapted to convey signals with same information data at different frequency range.

8. The system according to any of claims 1 to 7,
wherein the system (10) further comprising at least one additional transmission-reception path, whereby the processing unit (14) is further adapted to generate the at least two communication channels via the transmission-reception paths.

9. The system according to claim 8,
wherein the processing unit (14) is further adapted to synchronize the transmission-reception paths.

10. A method for testing broadband communication channels comprises the steps of:
providing at least one transmission-reception "TRX" path (11) comprising a transmission end (12) and a reception end (13), and
generating at least two communication channels in the transmission-reception path (11),
**characterized in that**
the at least two communication channels belong to different communication standards, thereby enabling multi-channel transmission and/or reception with more than one carrier via one transmission-reception path (11) .

11. The method according to claim 10,
wherein the method further comprises the step of synchronizing the at least two communication channels.

12. The method according to claim 10 or 11,
wherein the method further comprises the steps of:
connecting at least one digital-to-analog converter (15) at the transmission end (12),
connecting at least one analog-to-digital converter (16) at the reception end (13), and
operating the digital-to-analog converter (15) and the analog-to-digital converter (16) in multi-channel-mode.

13. The method according to any of claims 10 to 12, wherein the method further comprises the step of transmitting signals with same information data at different frequency range through the at least two communication channels.

14. The method according to any of claims 10 to 13,
wherein the method further comprises the step of providing at least one additional transmission-reception path thereby generating the at least two communication channels via the transmission-reception paths.

15. The method according to claim 14,
wherein the method further comprises the step of synchronizing the transmission-reception paths.

## Patentansprüche

1. System (10) zum Testen von Breitbandkommunikationskanälen, das Folgendes umfasst:
mindestens einen Übertragungs-/Empfangs("TRX")-Pfad (11), der ein Übertragungsende (12) und ein Empfangsende (13) umfasst, und
eine Verarbeitungseinheit (14), die angepasst ist, im Übertragungs-/Empfangspfad (11) mindestens zwei Kommunikationskanäle zu erzeugen,
**dadurch gekennzeichnet, dass**
die mindestens zwei Kommunikationskanäle zu zwei verschiedenen Kommunikationsstandards gehören, dadurch Ermöglichen einer Mehrkanalübertragung und/oder eines Mehrkanalempfangs mit mehr als einem Träger via einen Übertragungs-/Empfangspfad (11).

2. System nach Anspruch 1,
wobei die Verarbeitungseinheit (14) ferner angepasst ist, die mindestens zwei Kommunikationskanäle zu synchronisieren.

3. System nach Anspruch 1 oder 2,
wobei der Übertragungs-/Empfangspfad (11) ferner eine Frequenzverschiebungseinheit (30) umfasst und wodurch die Verarbeitungseinheit (14) ferner angepasst ist, die Frequenzverschiebungseinheit (30) zu steuern.

4. System nach einem der Ansprüche 1 bis 3,
wobei das System (10) ferner Folgendes umfasst:
mindestens einen Digital-Analog-Wandler (15), der mit dem Übertragungsende (12) verbunden ist, und
mindestens einen Analog-Digital-Wandler (16), der mit dem Empfangsende (13) verbunden ist.

5. System nach Anspruch 4,
wobei der Digital-Analog-Wandler (15) und der Analog-Digital-Wandler (16) angepasst sind, in einem Mehrkanalmodus betrieben zu werden.

6. System nach einem der Ansprüche 1 bis 5,
wobei mindestens ein Kommunikationskanal einen Störer umfasst, vorzugsweise einen vordefinierten Störer.

7. System nach einem der Ansprüche 1 bis 6,
wobei die mindestens zwei Kommunikationskanäle ferner angepasst sind, Signale mit selben Informationsdaten in verschiedenen Frequenzbereichen zu übermitteln.

8. System nach einem der Ansprüche 1 bis 7,
wobei das System (10) ferner mindestens einen zusätzlichen Übertragungs-/Empfangspfad umfasst, wodurch die Verarbeitungseinheit (14) ferner angepasst ist, die mindestens zwei Kommunikationskanäle via die Übertragungs-/Empfangspfade zu erzeugen.

9. System nach Anspruch 8,
wobei die Verarbeitungseinheit (14) ferner angepasst ist, die Übertragungs-/Empfangspfade zu synchronisieren.

10. Verfahren zum Testen von Breitbandkommunikationskanälen, das die folgenden Schritte umfasst:
Bereitstellen von mindestens einem Übertragungs-/Empfangs("TRX")-Pfad (11), der ein Übertragungsende (12) und ein Empfangsende (13) umfasst, und
Erzeugen von mindestens zwei Kommunikationskanälen im Übertragungs-/Empfangspfad (11),
**dadurch gekennzeichnet, dass**
die mindestens zwei Kommunikationskanäle zu verschiedenen Kommunikationsstandards gehören, dadurch Ermöglichen einer Mehrkanalübertragung und/oder eines Mehrkanalempfangs mit mehr als einem Träger via einen Übertragungs-/Empfangspfad (11).

11. Verfahren nach Anspruch 10,
wobei das Verfahren ferner den Schritt des Synchronisierens der mindestens zwei Kommunikationskanäle umfasst.

12. Verfahren nach Anspruch 10 oder 11,
wobei das Verfahren ferner die folgenden Schritte umfasst:
Verbinden von mindestens einem Digital-Analog-Wandler (15) am Übertragungsende (12),
Verbinden von mindestens einem Analog-Digital-Wandler (16) am Empfangsende (13), und
Betreiben des Digital-Analog-Wandlers (15) und des Analog-Digital-Wandlers (16) in einem Mehrkanalmodus.

13. Verfahren nach einem der Ansprüche 10 bis 12,
wobei das Verfahren ferner den Schritt des Übertragens von Signalen mit selben Informationsdaten in verschiedenen Frequenzbereichen über die mindestens zwei Kommunikationskanäle umfasst.

14. Verfahren nach einem der Ansprüche 10 bis 13,
wobei das Verfahren ferner den Schritt des Bereitstellens von mindestens einem zusätzlichen Übertragungs-/Empfangspfad, dadurch Erzeugen der mindestens zwei Kommunikationskanäle via die Übertragungs-/Empfangspfade.

15. Verfahren nach Anspruch 14,
wobei das Verfahren ferner den Schritt des Synchronisierens der Übertragungs-/Empfangspfade umfasst.

## Revendications

1. Système (10) pour tester des canaux de communication à large bande comprenant :
au moins un chemin de transmission-réception "TRX" (11) comprenant une extrémité de transmission (12) et une extrémité de réception (13), et
une unité de traitement (14) adaptée pour générer au moins deux canaux de communication dans le chemin de transmission-réception (11),
**caractérisé en ce que**
les au moins deux canaux de communication appartiennent à deux normes de communication différentes, permettant ainsi une transmission et/ou une réception multicanaux avec plus d'une porteuse via un chemin de transmission-réception (11).

2. Système selon la revendication 1,
dans lequel l'unité de traitement (14) est en outre adaptée pour synchroniser les au moins deux canaux de communication.

3. Système selon la revendication 1 ou 2,
dans lequel le chemin de transmission-réception (11) comprend en outre une unité de décalage de fréquence (30), et selon lequel l'unité de traitement (14) est en outre adaptée pour commander l'unité de décalage de fréquence (30).

4. Système selon l'une quelconque des revendications 1 à 3, dans lequel le système (10) comprend en outre :
au moins un convertisseur numérique-analogique (15) connecté à l'extrémité de transmission (12), et
au moins un convertisseur analogique-numérique (16) connecté à l'extrémité de réception (13).

5. Système selon la revendication 4,
dans lequel le convertisseur numérique-analogique (15) et le convertisseur analogique-numérique (16) sont adaptés pour fonctionner en mode multicanal.

6. Système selon l'une quelconque des revendications 1 à 5,
dans lequel au moins un canal de communication comprend un brouilleur, de préférence un brouilleur prédéfini.

7. Système selon l'une quelconque des revendications 1 à 6,
dans lequel les au moins deux canaux de communication sont en outre adaptés pour transporter des signaux avec les mêmes données d'information à une gamme de fréquences différente.

8. Système selon l'une quelconque des revendications 1 à 7,
dans lequel le système (10) comprend en outre au moins un chemin de transmission-réception supplémentaire, selon lequel l'unité de traitement (14) est en outre adaptée pour générer les au moins deux canaux de communication via les chemins de transmission-réception.

9. Système selon la revendication 8,
dans lequel l'unité de traitement (14) est en outre adaptée pour synchroniser les chemins de transmission-réception.

10. Procédé pour tester des canaux de communication à large bande, comprenant les étapes consistant à :
fournir au moins un chemin de transmission-réception "TRX" (11) comprenant une extrémité de transmission (12) et une extrémité de réception (13), et
générer au moins deux canaux de communication dans le chemin de transmission-réception (11),
**caractérisé en ce que**
les au moins deux canaux de communication appartiennent à des normes de communication différentes, permettant ainsi une transmission et/ou une réception multicanaux avec plus d'une porteuse via un chemin de transmission-réception (11).

11. Procédé selon la revendication 10,
dans lequel le procédé comprend en outre l'étape consistant à synchroniser les au moins deux canaux de communication.

12. Procédé selon la revendication 10 ou 11,
dans lequel le procédé comprend en outre les étapes consistant à :
connecter au moins un convertisseur numérique-analogique (15) à l'extrémité de transmission (12),
connecter au moins un convertisseur analogique-numérique (16) à l'extrémité de réception (13), et
faire fonctionner le convertisseur numérique-analogique (15) et le convertisseur analogique-numérique (16) en mode multicanal.

13. Procédé selon l'une quelconque des revendications 10 à 12,
dans lequel le procédé comprend en outre l'étape consistant à transmettre des signaux avec les mêmes données d'information à une gamme de fréquences différente à travers les au moins deux canaux de communication.

14. Procédé selon l'une quelconque des revendications 10 à 13,
dans lequel le procédé comprend en outre l'étape consistant à fournir au moins un chemin de transmission-réception supplémentaire générant ainsi les au moins deux canaux de communication via les chemins de transmission-réception.

15. Procédé selon la revendication 14,
dans lequel le procédé comprend en outre l'étape consistant à synchroniser les chemins de transmission-réception.
